# EUROPÄISCHE PATENTANMELDUNG

(11) **EP 3 531 301 A1**
(43) Veröffentlichungstag der Anmeldung: **28.08.2019**
(21) Anmeldenummer: 19158668.4
(22) Anmeldetag: 21.02.2019
(51) Int. Cl.: G06F 16/33, G06F 16/242

(54) **COMPUTERIMPLEMENTIERTES VERFAHREN ZUM ABFRAGEN VON DATEN**

(30) Priorität: 27.02.2018 DE 102018104437
(71) Anmelder: DTMS GmbH, 55118 Mainz (DE)
(72) Erfinder: Solak, Imdat, 81539 München (DE)
(74) Vertreter: Rothkopf, Ferdinand

(57) **Zusammenfassung**

Die Erfindung betrifft ein computerimplementiertes Verfahren zum Abfragen von Daten mit den Verfahrensschritten: Eingeben eines Anfrage-Datensatzes, Ermitteln eines Antwort-Datensatzes zu dem Anfrage-Datensatz und Ausgeben des Antwort-Datensatzes, wobei bei dem Ermitteln des Antwort-Datensatzes ein Normieren des Anfrage-Datensatzes in einer Anfrage-Normierungseinrichtung erfolgt.

## Beschreibung

### Gebiet der Erfindung

Die Erfindung betrifft ein computerimplementiertes Verfahren zum Abfragen von Daten mit den Verfahrensschritten: Eingeben eines Anfrage-Datensatzes, Ermitteln eines Antwort-Datensatzes zu dem Anfrage-Datensatz und Ausgeben des Antwort-Datensatzes.

### Hintergrund der Erfindung

Computerimplementierte Verfahren laufen auf einem Computer ab und werden von einem Computerprogramm gesteuert. Computerprogramme gehören zur Software des Computers und beinhalten eine Folge von Anweisungen, um mithilfe des Computers bestimmte Aufgaben zu bearbeiten oder zu lösen. Eine solche zu bearbeitende Aufgabe stellt das Abfragen von Daten dar. Zum Abfragen von Daten müssen vorhandene Informationen in einer Informationsquelle gefunden bzw. ermittelt werden. Dafür wird eine Anfrage bzw. ein Anfrage-Datensatz eingegeben. Mit einem Datensatz ist hier mindestens eine Information gemeint. Für die Anfrage ermittelt das Computerprogramm eine Antwort bzw. einen Antwort-Datensatz. Die Antwort wird dann von dem Computerprogramm ausgegeben.

Das Ermitteln der Antwort nimmt manchmal viel Zeit in Anspruch, oder eine als Antwort geeignete Information kann nicht gefunden werden, obwohl diese in einem Netzwerk oder einer anderen zugänglichen Informationsquelle zur Verfügung steht. Zudem werden inhaltlich gleiche Anfragen teilweise sehr unterschiedlich formuliert, was ein Verstehen bzw. Erfassen der Anfrage mithilfe des Computerprogramms erschwert.

Der Erfindung liegt daher die Aufgabe zugrunde, ein Verfahren zum schnellen und effektiven Abfragen von Daten bereitzustellen, welches mindestens einen der oben genannten Nachteile überwindet.

### Zusammenfassung der Erfindung

Diese Aufgabe ist erfindungsgemäß mit einem computerimplementierten Verfahren zum Abfragen von Daten gelöst, mit den Verfahrensschritten: Eingeben eines Anfrage-Datensatzes, Ermitteln eines Antwort-Datensatzes zu dem Anfrage-Datensatz und Ausgeben des Antwort-Datensatzes, wobei bei dem Ermitteln des Antwort-Datensatzes ein Normieren des Anfrage-Datensatzes in einer Anfrage-Normierungseinrichtung erfolgt. Mit dem Normieren ist hier das Überführen eines Datensatzes, hier speziell des Anfrage-Datensatzes, in eine einheitliche Form bzw. Normform gemeint, bei der vorzugsweise nur die für eine Verwendung des Datensatzes relevanten Informationen beibehalten werden. Ein solches Normieren wird auch als Generalisieren bezeichnet, wobei der Anfrage-Datensatz für weitere Verfahrensschritte vorbereitet bzw. vorverarbeitet wird. Für das Normieren wird die Anfrage-Normierungseinrichtung genutzt, welche bevorzugt als ein Modul des Computerprogramms ausgebildet ist. Verschieden formulierte Anfrage-Datensätze, die aber die gleiche Bedeutung haben bzw. im Sinn identisch sind, können somit gleichartig verarbeitet werden bzw. in eine einzige Normform überführt werden. Dies führt zu einer Effizienzsteigerung des Verfahrens und einer Einsparung von Speicherressourcen.

Bei dem Normieren des Anfrage-Datensatzes erfolgt vorteilhaft ein Umwandeln mindestens eines Datensatz-Elements von dem Anfrage-Datensatz in eine Normform. Das Datensatz-Element ist ein Bestandteil des Anfrage-Datensatzes und kann unabhängig von weiteren Bestandteilen des Anfrage-Datensatzes verarbeitet werden. Somit können auch Datensatz-Elemente von verschiedenen Datensätzen, hier speziell von verschiedenen Anfrage-Datensätzen, gleichartig verarbeitet werden. Das Verfahren wird dadurch noch effizienter und weitere Speicherressourcen werden eingespart.

Bevorzugt wird bei dem Umwandeln des mindestens einen Datensatz-Elements ein enthaltenes Wort in seine Wort-Grundform überführt. Das Wort ist vorzugsweise als ein Verb oder ein Nomen ausgebildet. Das Verb liegt danach unkonjugiert bzw. in seiner Infinitivform vor. Das Nomen liegt dann undekliniert vor. In einer weiteren vorteilhaften Weiterbildung der Erfindung ist das Wort als ein Adjektiv, ein Artikel, ein Numeral oder ein Pronomen ausgebildet. Derart ausgebildete Wörter werden bei dem Umwandeln in ihre undeklinierten Formen überführt. Eine mögliche Anzahl verschiedener zu verarbeitender Datensatz-Elemente wird mithilfe des Überführens des jeweils enthaltenen Wortes in seine Wort-Grundform deutlich verringert. Resultierende Vorteile sind auch hier Effizienzsteigerung beim Ermitteln des Antwort-Datensatzes und Einsparung von Speicherressourcen.

Ferner wird bei dem Umwandeln des mindestens einen Datensatz-Elements bevorzugt eine enthaltene Zeitangabe in eine Zeit-Normform überführt. Die Zeit-Normform ist besonders vorteilhaft in der Form "Jahr-Monat-Tag Stunde:Minute:Sekunde" gestaltet, und stellt somit immer einen bestimmten Zeitpunkt dar. So entsteht beispielsweise aus einem Datensatz-Element "Anfang Dezember im Jahr des Millenniums" ein umgewandeltes Datensatz-Element "2000-12-01 00:00:00". Das Umwandeln der jeweils enthaltenen Zeitangabe in die Zeit-Normform führt zu deutlich weniger verschiedenen Datensatz-Elementen, die mittels des Computerprogramms verarbeitet werden müssen. In Bezug auf die Datensatz-Elemente werden dabei die gleichen Vorteile wie oben erzielt.

In einer alternativen Ausführungsform wird die Zeit-Normform eines Datensatz-Elements mit enthaltener Zeitangabe nicht als Zeitpunkt, sondern als Zeitraum dargestellt. Diese Normform hat dann vorzugsweise die Form "Jahr-Monat-Tag Stunde:Minute:Sekunde bis Jahr-Monat-Tag Stunde:Minute:Sekunde", wobei das Wort "bis" hier beispielhaft als Trennelement zwischen einem Start-Zeitpunkt und einem End-Zeitpunkt benutzt wird. Es sind auch alternative Trennelemente, unter anderem ein Freizeichen, einsetzbar. Diese Ausführungsform zum Darstellen der Zeit-Normform als Zeitraum hat insbesondere den Vorteil, dass auch ein Zeitpunkt dargestellt werden kann, beispielsweise mittels Gleichsetzen von Anfangs- und End-Zeitpunkt. Diese Normform für Datensatz-Elemente mit enthaltener Zeitangabe kann somit flexibler eingesetzt werden und die Verarbeitung von Zeitangaben weiter vereinheitlichen.

Weiterhin wird in einer vorteilhaften Weiterbildung bei dem Normieren des Anfrage-Datensatzes dem mindestens einen Datensatz-Element ein Kategorie-Begriff zugeordnet. Das mindestens eine Datensatz-Element wird also kategorisiert bzw. klassifiziert. Beispielhafte Kategorie-Begriffe sind ORT und ZEIT. Werden diese Kategorie-Begriffe verwendet, so wird in dem beispielhaften Anfrage-Datensatz "Wie wird das Wetter in München nächste Woche?" einem ersten Datensatz-Element "München" der Kategorie-Begriff ORT und einem zweiten Datensatz-Element "nächste Woche" der Kategorie-Begriff ZEIT zugeordnet. In einer weiteren vorteilhaften Ausgestaltung erfolgt dabei ein Erzeugen einer Datensatz-Maske mit sämtlichen Kategorie-Begriffen des Anfrage-Datensatzes. Hier hat die Datensatz-Maske beispielhaft die Form "Wie wird das Wetter in ORT ZEIT?". Vorzugsweise werden noch weitere Datensatz-Elemente des Anfrage-Datensatzes ihren Kategorie-Begriffen zugeordnet und in der zugehörigen Datensatz-Maske mit ihren Kategorie-Begriffen ersetzt. Das Zuordnen der Kategorie-Begriffe hat den Vorteil, dass das Computerprogramm eine wesentlich geringere Anzahl an verschiedenen Anfrage-Datensätzen verarbeiten muss, wenn es die Kategorie-Begriffe anstelle der Datensatz-Elemente verwendet. Somit werden beispielsweise mithilfe des Kategorie-Begriffs ORT allein für Deutschland mit seinen etwa einhunderttausend Orten ebenso viele mögliche Datensätze eingespart. Verwendet man zusätzlich den Kategorie-Begriff ZEIT, so ist eine mögliche Einsparung an Datensätzen, und dadurch auch an Rechenleistung und Speicherbedarf, noch um ein Vielfaches höher.

In einer weiteren vorteilhaften Ausführungsform wird bei dem Zuordnen des Kategorie-Begriffs das mindestens eine Datensatz-Element unter dem ihm zugeordnetem Kategorie-Begriff in einer Kategorie-Speichereinrichtung gespeichert. Die Kategorie-Speichereinrichtung ist vorzugsweise als mindestens eine Relation bzw. Tabelle in einer relationalen Datenbank, das heißt in einer Datenbank mit einem tabellenbasierten relationalen Datenbankmodell, gestaltet. Bei Bedarf, vorzugsweise in dem ermittelten Antwort-Datensatz, wird der Kategorie-Begriff dann wieder durch das Datensatz-Element ersetzt. Das Datensatz-Element wird somit für einen effizienten Zugriff verfügbar gemacht.

In einer besonders vorteilhaften Ausführungsform wird das Datensatz-Element dabei gemeinsam mit seiner Normform in der Kategorie-Speichereinrichtung gespeichert, vorzugsweise in der relationalen Datenbank. Nachfolgend wird ein solches Speichern für den Kategorie-Begriff ZEIT bzw. bei Datensatz-Elementen mit enthaltener Zeitangabe beispielhaft und nicht einschränkend erläutert. Die relationale Datenbank beinhaltet dabei vorzugsweise eine erste Tabelle mit der Zeitangabe, eine zweite Tabelle mit der Normform und eine dritte Tabelle zum Verknüpfen der Zeitangabe mit seiner Normform. Die erste Tabelle wird hier beispielhaft als "Zeitangabe_Eingabe" bezeichnet und enthält bevorzugt die Attribute bzw. Tabellenspalten "Eingabe-ID", "Zeitangabe" und "Zeitstempel". Die zweite Tabelle wird hier beispielhaft als "Zeitangabe-Norm" bezeichnet und enthält bevorzugt die Attribute "Norm-ID" und "Normzeit". Die dritte Tabelle wird hier beispielhaft als "Normiert" bezeichnet und enthält bevorzugt die Attribute "Eingabe-ID" und "Norm-ID". Beim Speichern des Datensatz-Elements, hier beispielhaft des oben genannten Datensatz-Elements "nächste Woche", wird in der Tabelle "Zeitangabe_Eingabe" ein neuer Eintrag bzw. eine neue Zeile mit dem Datensatz-Element "nächste Woche" für das Attribut "Zeitangabe" angelegt. Dies geschieht aber zur Vermeidung von Redundanzen nur dann, wenn die Tabelle die Zeitangabe "nächste Woche" noch nicht enthält. Das Attribut "Eingabe-ID" wird vorzugsweise mittels einer fortlaufenden Nummer belegt, abhängig von der Anzahl aller Einträge der Tabelle. Für das Attribut "Zeitstempel" wird der Zeitpunkt des Eingebens des Datensatz-Elements eingetragen. Vereinfachend und exemplarisch wird hierfür das Datensatz-Element "nächste Woche" die Eingabe-ID mit "1" und der Zeitstempel mit "2017-12-11 13:00:00" belegt. Bevorzugt erfolgt hier ein Normieren des Datensatz-Elements "nächste Woche" anhand der Attribute "Zeitangabe" und "Zeitstempel". Ausgehend von dem Zeitstempel, welcher den 11. Dezember 2017 um 13 Uhr, im Übrigen ein Montag, darstellt, wird die Zeitangabe "nächste Woche" als der Zeitraum vom 18. bis 24. Dezember 2017 identifiziert.

Wie bereits oben in einer Ausführungsform dargestellt, wird als bevorzugte Zeit-Normform für Datensatz-Elemente mit enthaltenen Zeitangaben, speziell bei Zeitangaben zu Zeiträumen, die Form "Jahr-Monat-Tag Stunde:Minute:Sekunde bis Jahr-Monat-Tag Stunde:Minute:Sekunde" verwendet. Dadurch entsteht das normierte Datensatz-Element "2017-12-18 00:00:00 bis 2017-12-24 23:59:59", welches nun als Normzeit bzw. für das Attribut "Normzeit" gemeinsam mit einer zugehörigen Norm-ID in die Tabelle "Zeitangabe_Norm" eingetragen wird. Um Redundanz zu vermeiden erfolgt ein Eintrag mit der Normzeit "2017-12-25 12:00:00" nur dann, wenn die Tabelle diese Normzeit noch nicht enthält. Eine zu dem Eintrag gehörige Norm-ID wird hier vereinfachend und beispielhaft mit "2" belegt. Abschließend werden die Zeitangabe "nächste Woche" und die Normzeit "2017-12-25 12:00:00" mittels der Eingabe-ID und Norm-ID miteinander verknüpft. Dabei wird ein neuer Eintrag mit der Eingabe-ID "1" und der Norm-ID "2" in der Tabelle "Normiert" angelegt. Das Datensatz-Element wird somit besonders effizient gespeichert und dabei sicher aufbewahrt.

Bei einer vorteilhaften Weiterbildung der Erfindung erfolgt bei dem Ermitteln des Antwort-Datensatzes ein Normieren einer gefundenen Antwort zu einer Kernantwort in einer Antwort-Normierungseinrichtung. Die gefundene Antwort wird also noch nachträglich verarbeitet bzw. nachverarbeitet. Zur Erläuterung wird nun der oben verwendete beispielhafte Anfrage-Datensatz "Wie wird das Wetter in München nächste Woche?" herangezogen. Die gefundene Antwort wird hier beispielhaft festgelegt als "Das Münchner Wetter wird kommende Woche sonnig, mit leichten Schauern, im Schnitt 19-24 Grad, nachts kühler bei 7-4 Grad". Diese Antwort wird nun in eine normierte Form gebracht, wobei die Kernantwort entsteht. Dabei werden sämtliche Informationen, wie zum Beispiel inhaltliche Wiederholungen aus dem Anfrage-Datensatz, entfernt. Die Kernantwort lautet dann "sonnig, mit leichten Schauern, im Schnitt 19-24 Grad, nachts kühler bei 7-4 Grad.". Mittels der Normierung der Antwort liegt für verschieden formulierte Anfragen bzw. Anfrage-Datensätze, die aber die gleiche Bedeutung haben bzw. im Sinn identisch sind, dieselbe Antwort vor. Mit anderen Worten, für vielen verschiedene, mögliche Antworten und/oder Formulierungen der Antwort wird ein sogenannter Platzhalter als generalisierte Form der Antwort bestimmt. Dadurch werden Speicherressourcen eingespart.

Darauf aufbauend erfolgt bei dem Ermitteln des Antwort-Datensatzes ein Erzeugen des Antwort-Datensatzes in der Antwort-Normierungseinrichtung, wobei der Antwort-Datensatz mindestens ein Datensatz-Element enthält, wovon ein Datensatz-Element die Kernantwort beinhaltet. Der erzeugte Antwort-Datensatz enthält also mindestens die Kernantwort. Dadurch wird eine angefragte Information bzw. eine Hauptinformation des Antwort-Datensatzes einheitlich ausgegeben. Dies führt zu einem Wiedererkennungswert beim Nutzer.

Bevorzugt erfolgt bei dem Erzeugen des Antwort-Datensatzes ein Zuordnen eines Kategorie-Begriffs zu mindestens einem Datensatz-Element von dem Antwort-Datensatz. Eines von dem mindestens einen Datensatz-Element beinhaltet dabei die Kernantwort. Diesem Datensatz-Element wird dabei vorzugsweise ein Kategorie-Begriff zugeordnet, der sich an den Kategorie-Begriffen aus dem zugehörigen Anfrage-Datensatz orientiert. Um bei dem oben bereits verwendeten Anfrage-Datensatz zu bleiben, werden hier wieder der Kategorie-Begriff ORT für "München" und der Kategorie-Begriff ZEIT für "nächste Woche" verwendet. Gemeinsam mit dem Wort "Wetter" wird hier exemplarisch der Kategorie-Begriff WetterBeiOrtUndZeit definiert und dem Datensatz mit der Kernantwort "sonnig, mit leichten Schauern, im Schnitt 19-24 Grad, nachts kühler bei 7-4 Grad" zugeordnet. Das Zuordnen der Kategorie-Begriffe den Vorteil, dass das Computerprogramm eine wesentlich geringere Anzahl an verschiedenen Antwort-Datensätzen verarbeiten muss, wenn es die Kategorie-Begriffe anstelle der Datensatz-Elemente verwendet.

Bei dem Zuordnen des Kategorie-Begriffs erfolgt vorzugsweise auch ein Speichern des mindestens einen Datensatz-Elements unter dem ihm zugeordneten Kategorie-Begriff in der Kategorie-Speichereinrichtung. Wie oben bereits für die Kategorie-Begriffe des Anfrage-Datensatzes ausgeführt, ist die Kategorie-Speichereinrichtung vorzugsweise als mindestens eine Relation bzw. Tabelle in einer relationalen Datenbank gestaltet. Das mindestens eine Datensatz-Element wird somit sicher aufbewahrt und für einen effizienten Zugriff verfügbar gemacht.

In einer weiteren vorteilhaften Ausführungsform erfolgt bei dem Normieren des Antwort-Datensatzes ein Erzeugen einer Datensatz-Maske, welche sämtliche Kategorie-Begriffe des Antwort-Datensatzes enthält. Die Kategorie-Begriffe sind hier beispielsweise ORT, ZEIT und WetterBeiOrtUndZeit. Die Datensatz-Maske für den Antwort-Datensatz hat hier beispielhaft die Form "Das Wetter in ORT ZEIT wird WetterBeiOrtUndZeit". Nach einem Einsetzen der den Kategorie-Begriffen zugeordneten Datensatz-Elementen entsteht der zum Ausgeben fertiggestellte Antwort-Datensatz "Das Wetter in München nächste Woche wird sonnig, mit leichten Schauern, im Schnitt 19-24 Grad, nachts kühler bei 7-4 Grad". Die Datensatz-Maske sorgt somit für eine einheitliche, vorstrukturierte Form für verschiedene Antwort-Datensätze.

In einer weiteren Ausführungsform wird bei dem Ermitteln eines Antwort-Datensatzes zunächst nur mindestens eine ID bzw. ein Index ermittelt, wobei der Index als eine ganze Zahl gestaltet ist, welcher einem Antwort-Datensatz oder mindestens einem Datensatz-Element des Antwort-Datensatzes zugeordnet ist. Dabei erfolgt ein direktes Suchen in einer indexierten Liste bzw. Tabelle, wobei der Index vorzugsweise ein Schlüssel in einer relationalen Datenbank ist. Die Verwendung von Indizes macht die Ermittlung des Antwort-Datensatzes schneller, bei geringerem Speicherbedarf bzw. weniger RAM-Verbrauch.

Erfindungsgemäß vorteilhaft erfolgt bei dem Ermitteln des Antwort-Datensatzes ein Speichern des Anfrage-Datensatzes und des zugehörigen Antwort-Datensatzes in mindestens einer Abfrage-Datenbank, wobei der Anfrage-Datensatz in einem Anfrage-Datensatzspeicher und der Antwort-Datensatz in einem Antwort-Datensatzspeicher gespeichert wird. Dabei sind die Datensatzspeicher bevorzugt jeweils als mindestens eine indexierte Tabelle oder Liste, und die Abfrage-Datenbank ist vorzugsweise als eine relationale Datenbank gestaltet. Je öfter für einen inhaltlich neuen Anfrage-Datensatz der Antwort-Datensatz ermittelt wird, umso mehr Antwort-Datensätze sind in der Abfrage-Datenbank verfügbar. Bei Bedarf kann für jeden sich wiederholenden Anfrage-Datensatz der zugehörige Antwort-Datensatz schnell abgerufen werden.

Die Erfindung sieht ferner ein computerlesbares Speichermedium mit einem Computerprogramm mit Befehlen vor, die bei dem Ausführen des Computerprogramms einen Computer dazu veranlassen, die Schritte eines computerimplementierten Verfahrens nach einem der oben beschriebenen Ausführungsformen auszuführen. Das Speichermedium ist zum Speichern von Daten vorgesehen, hier vorzugsweise zum Speichern des Computerprogramms und mindestens einen Anfrage-Datensatz und mindestens einen zugehörigen Antwort-Datensatz. Somit werden das Computerprogramm, sowie der mindestens eine Anfrage-Datensatz und der mindestens eine Antwort-Datensatz sicher aufbewahrt.

Gemäß der Erfindung ist ferner ein Datenverarbeitungssystem zum Ausführen eines computerimplementierten Verfahrens nach einem der oben beschriebenen Ausführungsformen bereitgestellt, wobei das Datenverarbeitungssystem einen Computer, eine Eingabe-Einrichtung, eine Ausgabe-Einrichtung und ein Netzwerk aufweist, und der Computer mindestens ein Computerprogramm, eine Abfrage-Datenbank und ein Speichermedium umfasst. Das Datenverarbeitungssystem ist zum Organisieren von Daten vorgesehen, und bildet die Grundlage für die oben beschriebenen Ausführungsformen des computerimplementierten Verfahrens. Der Computer ist zum Verarbeiten von Eingabe-Daten, vorzugsweise Anfrage-Datensätzen, in Ausgabe-Daten, vorzugsweise Antwort-Datensätzen, bereitgestellt. Die Eingabe-Einrichtung ist vorgesehen, um die Eingabe-Daten in den Computer einzugeben, wobei diese Eingabe-Daten bevorzugt als Anfrage-Datensätze gestaltet sind. Die Ausgabe-Einrichtung ist vorgesehen, um die Ausgabe-Daten von dem Computer auszugeben, wobei diese Daten bevorzugt als Antwort-Datensätze gestaltet sind. Das Netzwerk bietet eine externe Informationsquelle für den Computer, wobei vorzugsweise das Internet als Netzwerk genutzt wird. Das Computerprogramm ist zum Ausführen des computerimplementierten Verfahrens auf dem Computer vorgesehen. Die Abfrage-Datenbank stellt eine Verknüpfung zwischen den Eingabe- und Ausgabe-Daten zur Verfügung, vorzugsweise eine Verknüpfung zwischen Anfrage-Datensätzen und Antwort-Datensätzen. Das Speichermedium ist zum Speichern von Daten, insbesondere der Antwort-Datensätze, bereitgestellt. Sämtliche für das computerimplementierte Verfahren aufgeführte Vorteile gelten auch für das erfindungsgemäße Datenverarbeitungssystem.

Ferner sind weitere Ausführungsformen möglich, die das computerimplementierte Verfahren und das Datenverarbeitungssystem noch effizienter machen.

So erfolgt bei dem Normieren des Anfrage-Datensatzes vorzugsweise mindestens einer der folgenden Verfahrensschritte:
- Umwandeln aller Buchstaben in ihre Kleinbuchstabenform und
- Entfernen aller Sonderzeichen.
Dabei wird der Anfrage-Datensatz vereinfacht, was zu einem schnelleren Verarbeiten des Anfrage-Datensatzes und somit zu einem schnelleren Ermitteln des Antwort-Datensatzes führt.

### Kurzbeschreibunq der Zeichnungen

Nachfolgende wird ein Ausführungsbeispiel der erfindungsgemäßen Lösung anhand der beigefügten schematischen Zeichnungen näher erläutert. Es zeigt:
- Fig. 1: ein Blockdiagramm eines Ausführungsbeispiels eines erfindungsgemäßen Datenverarbeitungssystems,
- Fig. 2: das Detail II gemäß Fig. 1,
- Fig. 3: einen Programmablaufplan eines Ausführungsbeispiels eines erfindungsgemäßen computerimplementierten Verfahrens,
- Fig. 4: das Detail IV gemäß Fig. 3,
- Fig. 5: das Detail V gemäß Fig. 4 und
- Fig. 6: das Detail VI gemäß Fig. 4.

### Detaillierte Beschreibung der Erfindung

Zum besseren Verständnis werden im Folgenden zweistellige Bezugszeichen zum Bezeichnen von Komponenten und dreistellige Bezugszeichen zum Bezeichnen von Verfahrensschritten verwendet.

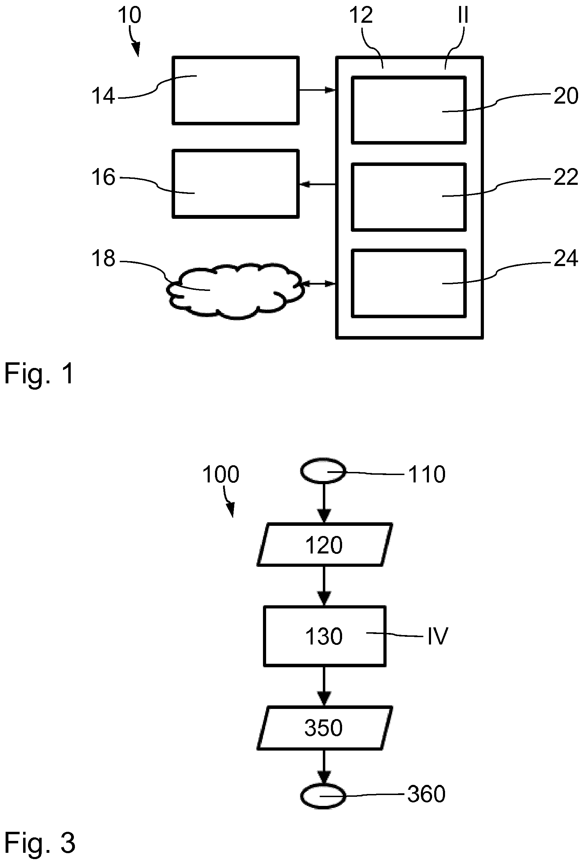

Fig. 1 zeigt ein Datenverarbeitungssystem 10 in einem sehr allgemeinen Blockdiagramm mit den Komponenten 12, 14, 16, 18, 20, 22 und 24. Dabei ist ein Computer 12 als größte Komponente dargestellt. Der Computer 12 ist mit einer Eingabe-Einrichtung 14 verbunden, hier mittels eines Pfeils in Richtung des Computers 12 veranschaulicht. Außerdem ist der Computer 12 mit einer Ausgabe-Einrichtung 16 verbunden, hier mittels eines Pfeils in Richtung der Ausgabe-Einrichtung 16 gezeigt. Der Computer 12 ist ebenfalls verbunden mit einem Netzwerk 18, dargestellt mit einem Doppelpfeil. Zudem sind ein Computerprogramm 20, eine Abfrage-Datenbank 22 und ein Speichermedium 24 als innere Komponenten des Computers 12 dargestellt.

Die Eingabe-Einrichtung 14 und die Ausgabe-Einrichtung 16 sind für eine Kommunikation zwischen dem Computer 12 und einem Nutzer vorgesehen. Mittels der Eingabe-Einrichtung 14 werden Daten von dem Nutzer an den Computer 12 übertragen, und mittels der Ausgabe-Einrichtung 16 werden Daten von dem Computer 12 an den Nutzer übergeben. Bei dem Netzwerk 18 handelt es sich hier um das Internet, welches für den Computer 12 als Informationsquelle nutzbar ist. Das Computerprogramm 20 ist zum Steuern der mit ihr verbundenen Komponenten wie der Abfrage-Datenbank 22 und dem Speichermedium 24, und deren Interaktion untereinander verantwortlich. In der nachfolgenden Figurenbeschreibung sind die in dem Computer 12 vorgesehenen Komponenten detaillierter dargestellt.

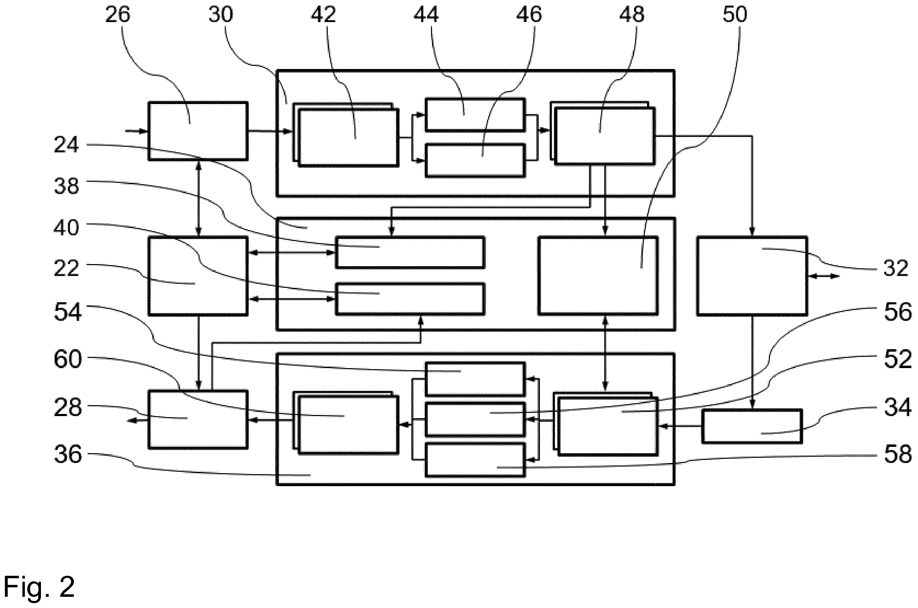

In Fig. 2 ist der Computer 12 mit seinen Komponenten gemäß Block II in Fig. 1 in einer detaillierteren Form abgebildet. Als Einstieg in die Fig. 2 dient hier der von außen auf die Komponente 26 zeigende Pfeil. Dabei zeigt dieser Pfeil auf einen Anfrage-Datensatz 26. Der Anfrage-Datensatz 26 ist mit der Abfrage-Datenbank 22 verbunden, gekennzeichnet mittels eines Doppelpfeils. Von dort führt ein Pfeil zu einer Komponente 28, was die Verbindung der Abfrage-Datenbank 22 mit einem Antwort-Datensatz 28 kennzeichnet. Der von dem Antwort-Datensatz 28 nach außen zeigende Pfeil dient hier als Ausstieg aus der Fig. 2 und somit aus Block II in Fig. 1.

Noch einmal von dem Anfrage-Datensatz 26 ausgehend führt ein Pfeil in eine Anfrage-Normierungseinrichtung 30. An der gegenüberliegenden Seite führt ein Pfeil aus der Anfrage-Normierungseinrichtung 30 zu einer Antwort-Ermittlungseinrichtung 32, von welcher wiederum ein Pfeil zu einer Antwort 34 führt. Der Doppelpfeil an der Antwort-Ermittlungseinrichtung 32 kennzeichnet eine Kommunikation mit der "Außenwelt" bzw. mit dem in Fig. 1 dargestellten Netzwerk 18 als Informationsquelle. Von der Antwort 34 ausgehend führt ein Pfeil in eine Antwort-Normierungseinrichtung 36. An der gegenüberliegenden Seite führt ein Pfeil aus der Antwort-Normierungseinrichtung 36 zu dem Antwort-Datensatz 28. Die zwischen dem Anfrage-Datensatz 26 und Antwort-Datensatz 28 angeordnete Abfrage-Datenbank 22 ist mittels Doppelpfeilen mit Komponenten 38, 40 innerhalb des Speichermediums 24 verbunden. Die Komponenten 38, 40 sind ein Anfrage-Datenspeicher 38 und ein Antwort-Datensatzspeicher 40.

Wiederum ausgehend von dem Anfrage-Datensatz 26 führt der Pfeil in die Anfrage-Normierungseinrichtung 30 zu Datensatz-Elementen 42. Von dort führt jeweils ein Pfeil zu einer Zeitangabe 44 und einem Wort 46. Von diesen Komponenten 44, 46 führt jeweils ein Pfeil zu Kategorie-Begriffen 48. Von den Kategorie-Begriffen 48 gehen neben dem Pfeil zur Antwort-Ermittlungseinrichtung 32 zwei weitere Pfeile ab. Diese führen beide in das Speichermedium 24 und dort konkret zu dem Anfrage-Datensatzspeicher 38 und einer Kategorie-Speichereinrichtung 50. Von dort führt ein Pfeil in die Antwort-Normierungseinrichtung 36 und dort zu Kategorie-Begriffen 52. Von den Kategorie-Begriffen 52 führt jeweils ein Pfeil zu einer Kernantwort 54, einer Zeitangabe 56 und einem Wort 58. Von diesen Komponenten 54, 56, 58 führt jeweils ein Pfeil zu Datensatz-Elementen 60. Von hier führt der aus der Antwort-Normierungseinrichtung 36 herausführende Pfeil wieder zu dem Antwort-Datensatz 28. Von dem Antwort-Datensatz 28 geht neben dem aus der Fig. 2 herausführenden Pfeil ein weiterer Pfeil ab, welcher zu dem Antwort-Datensatzspeicher 40 im Speichermedium 24 führt.

Nachdem die einzelnen Komponenten in dem Computer 12 des Datenverarbeitungssystems 10 mit ihren Verknüpfungen aufgeführt wurden, erfolgt nun eine funktionale Erläuterung dieser Komponenten. Der "von außen" eingegebene Anfrage-Datensatz 26 wird zunächst mittels der Abfrage-Datenbank 22 mit dem Anfrage-Datensatzspeicher 38 abgeglichen. Wird der Anfrage-Datensatz 26 im Anfrage-Datensatzspeicher 38 gefunden, so wird mittels der Abfrage-Datenbank 22 der zugehörige Antwort-Datensatz 28 aus dem Antwort-Datensatzspeicher 40 gelesen und "nach außen" ausgegeben. Wird der Anfrage-Datensatz 26 jedoch nicht von der Abfrage-Datenbank 22 gefunden, erfolgt eine Übergabe des Anfrage-Datensatzes 26 an die Anfrage-Normierungseinrichtung 30. Hier wird der Anfrage-Datensatz 26 zunächst in Datensatz-Elemente 42 zerlegt, wobei enthaltene Zeitangaben 44 und Worte 46 in ihre jeweilige Normform umgewandelt werden.

Den Datensatz-Elementen 42 werden dann jeweils Kategorie-Begriffe 48 zugeordnet und diese dann in der Kategorie-Speichereinrichtung 50 gespeichert. Außerdem wird ein dabei erzeugter normierter Anfrage-Datensatz 26 in dem Anfrage-Datensatzspeicher 38 gespeichert. Stellt die Abfrage-Datenbank 22 dabei in dem Anfrage-Datensatzspeicher 38 eine Redundanz bzw. eine Übereinstimmung mit dem normierten Anfrage-Datensatz 26 fest, so wird der zugehörige Antwort-Datensatz 28 aus dem Antwort-Datensatzspeicher 40 gelesen und ausgegeben. Ist dem nicht so, erfolgt eine Übergabe des normierten Anfrage-Datensatzes 26 an die Antwort-Ermittlungseinrichtung 32. Hier wird nun nach der Antwort 34 bzw. einer Information zu dem Anfrage-Datensatz 26 gesucht. Kann diese Information nicht gefunden werden, wird die Antwort 34 mit einer entsprechenden Standardaussage belegt und direkt zum Ausgeben als Antwort-Datensatz 28 weitergeleitet.

Wird die gesuchte Information gefunden, so erfolgt mit der Antwort 34 eine Übergabe dieser Information an die Antwort-Normierungseinrichtung 36. Anhand der Kategorie-Begriffe 52, welche die Kategorie-Speichereinrichtung 50 bereitstellt, werden aus der Antwort 34 solche Informationen entfernt, die bereits in dem Anfrage-Datensatz 26 enthalten waren. Dabei entsteht die Kernantwort 54. Gleichzeitig werden diese normierten Informationen an die Antwort-Normierungseinrichtung 36 übergeben, hier als die Zeitangabe 56 und dem Wort 58. Gemeinsam mit der Kernantwort 54 entstehen so mehrere Datensatz-Elemente 60, aus denen ein normierter Antwort-Datensatz 28 erzeugt wird. Dieser Antwort-Datensatz 28 wird nun ausgegeben und in dem Antwort-Datensatzspeicher 40 gespeichert. Mittels der Abfrage-Datenbank 22 wird der Antwort-Datensatz 28 mit dem zugehörigen Anfrage-Datensatz 26 verknüpft, um für eine erneute Abfrage verfügbar zu sein.

Fig. 3 zeigt ein computerimplementiertes Verfahren 100 in einem sehr allgemeinen Programmablaufplan mit den Operationen bzw. Verfahrensschritten 110, 120, 130, 350 und 360. Für die in dieser und den folgenden Figurenbeschreibungen genannten Komponenten werden die Bezugszeichen aus den Figuren 1 und 2 verwendet. Wie bereits erwähnt, wurden zur besseren Unterscheidbarkeit zweistellige Bezugszeichen für Komponenten und dreistellige Bezugszeichen für Verfahrensschritte, im Folgenden auch Schritte genannt, verwendet. Der Einstieg in das Verfahren 100 erfolgt mit einem Start 110, gefolgt von einem Eingeben 120 des Anfrage-Datensatzes 26. Beispielhaft wird der Anfrage-Datensatz 26 hier mit der Frage "Was ist am 3. Oktober in Deutschland?" belegt. Nun erfolgt ein Ermitteln 130 des Antwort-Datensatzes 28, bevor dann ein Ausgeben 350 des Antwort-Datensatzes 28 als letzter Verfahrensschritt vor dem Ende 360 erfolgt. Der Antwort-Datensatz 28 wird hier beispielhaft mit der Antwort "Am 3. Oktober ist in Deutschland Tag der Deutschen Einheit." belegt. Wie das Ermitteln 130 dieses Antwort-Datensatzes 28 erfolgt, wird in den nachfolgenden Figurenbeschreibungen detailliert dargestellt.

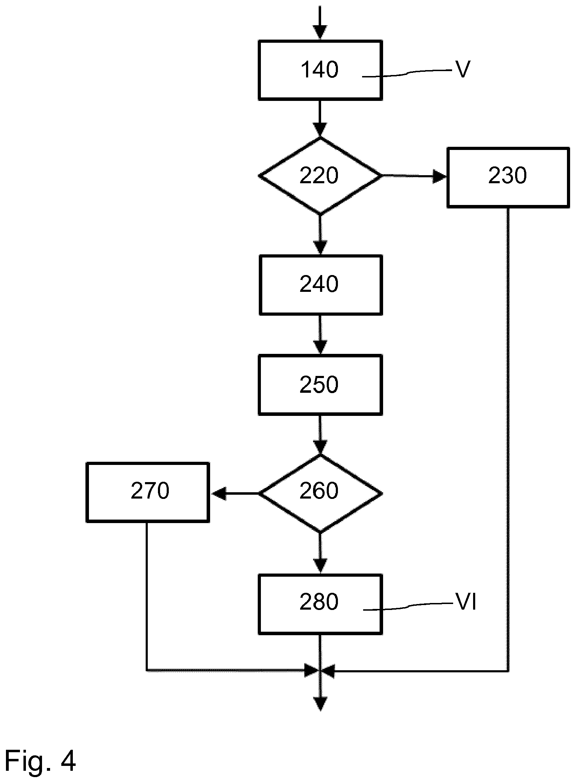

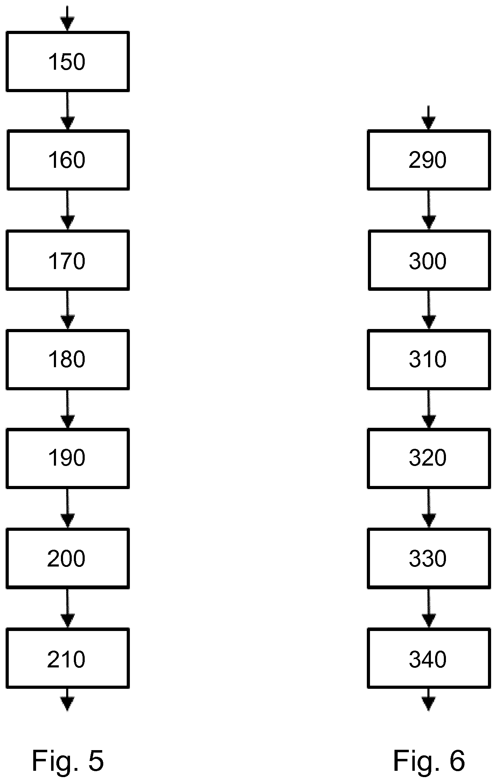

In Fig. 4 ist der Verfahrensschritt zum Ermitteln 130 des Antwort-Datensatzes 28 gemäß Detail IV in Fig. 3 in einer detaillierteren Form veranschaulicht und beinhaltet die Verfahrensschritte 140, 220, 230, 240, 250, 260, 270 und 280. In Schritt 140 wird der Anfrage-Datensatz 26 normiert. Das Normieren 140 wird in der Beschreibung zu Fig. 5 im Detail erläutert. Anhand des normierten Anfrage-Datensatzes 26 wird in Schritt 220 mittels der Abfrage-Datenbank 22 festgestellt, ob die enthaltene Frage schon einmal von dem Verfahren 100 bearbeitet wurde und somit bereits ein zugehöriger Antwort-Datensatz 28 vorliegt. Ist dem so, wird der Antwort-Datensatz 28 abgerufen bzw. aus dem Antwort-Datensatzspeicher 40 ausgelesen und zum Ausgeben 350 weitergeleitet. Andernfalls wird der normierte Anfrage-Datensatz 26 in Schritt 240 in dem Anfrage-Datensatzspeicher 38 gespeichert. In Schritt 250 wird nach einer Antwort 34 zu dem normierten Anfrage-Datensatz 26 gesucht, und in Schritt 260 wird festgestellt, ob diese Antwort 34 gefunden wurde. Wurde keine Antwort 34 gefunden, so erfolgt in Schritt 270 ein Erzeugen und Weiterleiten einer Standard-Antwort für Fehlversuche. Andernfalls wird in Schritt 280 der Antwort-Datensatz 28 erzeugt, wobei die Antwort 34 verwendet wird. Das Erzeugen 280 des Antwort-Datensatzes 28 wird in der Beschreibung zu Fig. 6 im Detail erläutert.

In Fig. 5 ist der Verfahrensschritt zum Normieren 140 des Anfrage-Datensatzes 26 gemäß Detail V in Fig. 4 in einer detaillierteren Form veranschaulicht und beinhaltet die Verfahrensschritte 150 bis 210. Der Anfrage-Datensatz 26 wurde oben bereits beispielhaft mit der Frage "Was ist am 3. Oktober in Deutschland?" belegt. In einem ersten Schritt 150 werden Datensatz-Elemente 42 in diesem Anfrage-Datensatz 26 identifiziert. Dabei werden nur solche Datensatz-Elemente identifiziert, welche den Anfrage-Datensatz 26 inhaltlich ausmachen bzw. welche die zum Ermitteln des Antwort-Datensatzes 28 notwendigen Informationen beinhalten. Diese Datensatz-Elemente 42 sind hier die Zeitangabe 44 "3. Oktober" und das Wort 46 "Deutschland". In Schritt 160 wird die Zeitangabe 44 in eine Zeit-Normform "Jahr-Monat-Tag Stunde:Minute:Sekunde" umgewandelt. Da keine Jahresangabe vorliegt, geht das Verfahren von dem nächsten 3. Oktober ab dem Zeitpunkt der Anfrage aus. Beispielhaft wird hier angenommen, dass die Anfrage am 11.Dezember 2017 erfolgte. Somit wird die Anfrage auf den 3. Oktober 2018 bezogen und es entsteht die normierte Zeitangabe "2018-10-03 00:00:00". In Schritt 170 wird das Wort 46 "Deutschland" in seine Wort-Grundform umgewandelt. Hier liegt das Wort 46 als ein undekliniertes Substantiv und somit bereits in seiner Wort-Grundform vor.

Es folgt nun eine Zuordnen 180 von Kategorie-Begriffen 48 zu den Datensatz-Elementen 42. Als Kategorie-Begriffe 48 werden hier beispielhaft ZEIT zu der Zeitangabe 44 und LAND zu dem Wort 46 bzw. "Deutschland" zugeordnet. In Schritt 190 werden die Datensatz-Elemente 42 nun unter ihren Kategorie-Begriffen 48 in der Kategorie-Speichereinrichtung 50 gespeichert. Anhand der normierten und kategorisierten Datensätze 42 wird in Schritt 200 der normierte Anfrage-Datensatz 26 erzeugt. Der normierte Anfrage-Datensatz 26 wird hier beispielhaft als "Deutschland 2018-10-03 00:00:00" belegt. In Schritt 210 wird dieser normierte Antwort-Datensatz 26 noch in dem Antwort-Datensatzspeicher 40 gespeichert und zum Ausgeben weitergeleitet. Somit werden alle zukünftigen Anfragen bis zum Zeitpunkt der normierten Zeitangabe 44, also bis zum 3. Oktober 2018 auf den normierten Anfrage-Datensatz 26 "Deutschland 2018-10-03 00:00:00" normiert bzw. zurückgeführt. Dabei kann der Anfrage-Datensatz 26 vor dem Normieren 140 beispielsweise auch "Welches Ereignis Deutschlands findet am dritten Oktober statt?" lauten, was zu demselben normierten Anfrage-Datensatz 26 führen würde.

In Fig. 6 ist der Verfahrensschritt zum Erzeugen 280 des Antwort-Datensatzes 28 gemäß Detail VI in Fig. 4 in einer detaillierteren Form veranschaulicht und beinhaltet die Verfahrensschritte 290 bis 340. Beispielhaft wird hier als gefundene Antwort 34 die Antwort "Deutschland hat am 3.10. Tag der Deutschen Einheit." angenommen. In Vorbereitung auf die folgenden Schritte erfolgt zunächst ein Abrufen 290 der kategorisierten Datensatz-Elemente 42 des Anfrage-Datensatzes 26 von der Kategorie-Speichereinrichtung 50. Somit liegen die Zeitangabe 56 als "2018-10-03 00:00:00" und das Wort 58 als "Deutschland" vor.

In Schritt 300 wird die Antwort 34 zu einer Kernantwort 54 normiert. Dabei werden Informationen aus der Antwort 34 entfernt, die bereits in dem Anfrage-Datensatz 26 enthalten waren und kategorisiert wurden. Somit werden "Deutschland" und "3.10." aus der Antwort 34 entfernt. Außerdem werden weitere Wörter oder Wortgruppen als nicht zur Kernantwort 54 gehörig identifiziert und entfernt, hier die Wortgruppe "hat am". Die Kernantwort 54 lautet somit "Tag der Deutschen Einheit". Diese Kernantwort 54 wird in Schritt 310 einem Kategorie-Begriff 52 zugeordnet, wobei dieser an die Kategorie-Begriffe 48 der kategorisierten Datensatz-Elemente 42 des Anfrage-Datensatzes 26 angelehnt wird. Beispielhaft wird der Kernantwort 54 hier EreignisBeiZeitUndLand als Kategorie-Begriff 52 zugeordnet. In Schritt 320 wird die Kernantwort 54 unter ihrem Kategorie-Begriff 52 in der Kategorie-Speichereinrichtung 50 gespeichert.

In Schritt 330 wird nun ein normierter Antwort-Datensatz 28 erzeugt. Dabei werden die Kernantwort 54, die Zeitangabe 56 und das Wort 58 herangezogen, um diese zu Datensatz-Elementen 60 zusammenzustellen. Da dieser Antwort-Datensatz 28 ausgegeben bzw. dem Nutzer beispielsweise zum Lesen vorgelegt werden soll, muss dieser als ein grammatisch korrekter Satz formuliert werden. Mithilfe der Datensatz-Elemente 60 "Tag der Deutschen Einheit", "Deutschland" und "2018-10-03 00:00:00" entsteht somit der Satz "Am 3. Oktober ist in Deutschland Tag der Deutschen Einheit". Dieser Antwort-Datensatz 28 wird in Schritt 340 noch in dem Antwort-Datenspeicher 40 gespeichert und zum Ausgeben weitergeleitet.

### Bezugszeichenliste

- 10: Datenverarbeitungssystem
- 12: Computer
- 14: Eingabe-Einrichtung
- 16: Ausgabe-Einrichtung
- 18: Netzwerk
- 20: Computerprogramm
- 22: Abfrage-Datenbank
- 24: Speichermedium
- 26: Anfrage-Datensatz
- 28: Antwort-Datensatz
- 30: Anfrage-Normierungseinrichtung
- 32: Antwort-Ermittlungseinrichtung
- 34: Antwort
- 36: Antwort-Normierungseinrichtung
- 38: Anfrage-Datensatzspeicher
- 40: Antwort-Datensatzspeicher
- 42: Datensatz-Elemente
- 44: Zeitangabe
- 46: Wort
- 48: Kategorie-Begriffe
- 50: Kategorie-Speichereinrichtung
- 52: Kategorie-Begriffe
- 54: Kernantwort
- 56: Zeitangabe
- 58: Wort
- 60: Datensatz-Elemente
- 100: Computerimplementiertes Verfahren
- 110: Start
- 120: Eingeben eines Anfrage-Datensatzes
- 130: Ermitteln eines Antwort-Datensatzes zu dem Anfrage-Datensatz
- 140: Normieren des Anfrage-Datensatzes
- 150: Identifizieren von Datensatz-Elementen: eine Zeitangabe und ein Wort
- 160: Umwandeln der Zeitangabe in eine Zeit-Normform
- 170: Umwandeln des Wortes in eine Wort-Grundform
- 180: Zuordnen von Kategorie-Begriffen zu den Datensatz-Elementen
- 190: Speichern der Datensatz-Elemente unter den Kategorie-Begriffen
- 200: Erzeugen eines normierten Anfrage-Datensatzes
- 210: Speichern und Weiterleiten des normierten Anfrage-Datensatzes
- 220: Anfrage-Datensatz verfügbar?
- 230: Ja - Auslesen und Weiterleiten des Antwort-Datensatzes
- 240: Nein - Speichern des Anfrage-Datensatzes
- 250: Suche nach einer Antwort
- 260: Antwort gefunden?
- 270: Nein - Erzeugen und Weiterleiten einer Standard-Antwort für Fehlversuche
- 280: Ja - Erzeugen des Antwort-Datensatzes
- 290: Abrufen der kategorisierten Datensatz-Elemente des Anfrage-Datensatzes
- 300: Normieren der Antwort zu einer Kernantwort
- 310: Zuordnen eines Kategorie-Begriffs zu der Kernantwort
- 320: Speichern der Kernantwort unter dem Kategorie-Begriff
- 330: Erzeugen eines normierten Antwort-Datensatzes
- 340: Speichern und Weiterleiten des normierten Antwort-Datensatzes
- 350: Ausgeben des Antwort-Datensatzes
- 360: Ende

## Patentansprüche

1. Computerimplementiertes Verfahren (100) zum Abfragen von Daten mit den Verfahrensschritten:
- Eingeben (120) eines Anfrage-Datensatzes (26),
- Ermitteln (130) eines Antwort-Datensatzes (28) zu dem Anfrage-Datensatz (26) und
- Ausgeben (350) des Antwort-Datensatzes (28),
**dadurch gekennzeichnet, dass** bei dem Ermitteln (130) des Antwort-Datensatzes (28) ein Normieren (140) des Anfrage-Datensatzes (26) in einer Anfrage-Normierungseinrichtung (30) erfolgt.

2. Computerimplementiertes Verfahren nach Anspruch 1,
**dadurch gekennzeichnet, dass** bei dem Normieren (140) des Anfrage-Datensatzes (26) ein Umwandeln (160, 170) mindestens eines Datensatz-Elements (42) von dem Anfrage-Datensatz (26) in eine Normform erfolgt.

3. Computerimplementiertes Verfahren nach Anspruch 2,
**dadurch gekennzeichnet, dass** bei dem Umwandeln (170) des mindestens einen Datensatz-Elements (42) ein enthaltenes Wort (46) in seine Wort-Grundform überführt wird.

4. Computerimplementiertes Verfahren nach Anspruch 2 oder 3,
**dadurch gekennzeichnet, dass** bei dem Umwandeln (160) des mindestens einen Datensatz-Elements (42) eine enthaltene Zeitangabe (44) in eine Zeit-Normform überführt wird.

5. Computerimplementiertes Verfahren nach Anspruch 2 bis 4,
**dadurch gekennzeichnet, dass** bei dem Normieren (140) des Anfrage-Datensatzes (26) ein Zuordnen (180) eines Kategorie-Begriffs (48) zu dem mindestens einen Datensatz-Element (42) erfolgt.

6. Computerimplementiertes Verfahren nach Anspruch 5,
**dadurch gekennzeichnet, dass** bei dem Zuordnen (180) des Kategorie-Begriffs (48) ein Speichern (190) des mindestens einen Datensatz-Elements (42) unter dem ihm zugeordneten Kategorie-Begriff (48) in einer Kategorie-Speichereinrichtung (50) erfolgt.

7. Computerimplementiertes Verfahren nach Anspruch 1 bis 6,
**dadurch gekennzeichnet, dass** bei dem Ermitteln (130) des Antwort-Datensatzes (28) ein Normieren (300) einer gefundenen Antwort (34) zu einer Kernantwort (54) in einer Antwort-Normierungseinrichtung (36) erfolgt.

8. Computerimplementiertes Verfahren nach Anspruch 1 bis 7,
**dadurch gekennzeichnet, dass** bei dem Ermitteln (130) des Antwort-Datensatzes (28) ein Erzeugen (280) des Antwort-Datensatzes (28) in der Antwort-Normierungseinrichtung (36) erfolgt, wobei der Antwort-Datensatz (28) mindestens ein Datensatz-Element (60) enthält, wovon ein Datensatz-Element (60) die Kernantwort (54) beinhaltet.

9. Computerimplementiertes Verfahren nach Anspruch 1 bis 8,
**dadurch gekennzeichnet, dass** bei dem Ermitteln (130) des Antwort-Datensatzes (28) ein Speichern (210) des Anfrage-Datensatzes (26) und des zugehörigen Antwort-Datensatzes (28) in mindestens einer Abfrage-Datenbank (22) erfolgt, wobei der Anfrage-Datensatz (26) in einem Anfrage-Datensatzspeicher (38) und der Antwort-Datensatz (28) in einem Antwort-Datensatzspeicher (40) gespeichert wird.

10. Computerlesbares Speichermedium (24) mit einem Computerprogramm (20) mit Befehlen, die bei dem Ausführen des Computerprogramms (20) einen Computer (12) dazu veranlassen, die Schritte eines computerimplementierten Verfahrens (100) nach einem der Ansprüche 1 bis 9 auszuführen.

11. Datenverarbeitungssystem (10) zum Ausführen eines computerimplementierten Verfahrens (100) nach einem der Ansprüche 1 bis 9, wobei das Datenverarbeitungssystem (10) einen Computer (12), eine Eingabe-Einrichtung (14), eine Ausgabe-Einrichtung (16) und ein Netzwerk (18) aufweist, und der Computer (12) mindestens ein Computerprogramm (20), eine Abfrage-Datenbank (22) und ein Speichermedium (24) umfasst.
